Europäisches Patentamt

(19) European Patent Office

Office européen des brevets

(11) EP 0 519 806 B1

## (12) FASCICULE DE BREVET EUROPEEN

(45) Date de publication et mention
de la délivrance du brevet:
**19.03.1997 Bulletin 1997/12**

(51) Int. Cl.⁶: **C01B 21/072**

(21) Numéro de dépôt: **92401672.8**

(22) Date de dépôt: **16.06.1992**

(54) **Procédé continu de préparation de nitrure d'aluminium par carbonitruration d'alumine**

Kontinuierliches Verfahren zur Herstellung von Aluminiumnitrid durch Karbonitrieren von Aluminium

Continuous process for the preparation of aluminium nitride by carbonitriding of aluminium

(84) Etats contractants désignés:
**AT BE CH DE DK ES FR GB GR IT LI LU NL PT SE**

(30) Priorité: **19.06.1991 FR 9107521**

(43) Date de publication de la demande:
**23.12.1992 Bulletin 1992/52**

(73) Titulaire: **ELF ATOCHEM S.A.**
**92800 Puteaux (FR)**

(72) Inventeurs:
• **Ravenel, Pierre**
**F-69230 Saint-Genis Laval (FR)**
• **Bachelard, Roland**
**F-69007 Lyon (FR)**
• **Disson, Jean-Pierre**
**F-69008 Lyon (FR)**
• **Joubert, Philippe**
**F-69005 Lyon (FR)**

(74) Mandataire: **Rochet, Michel et al**
**ELF ATOCHEM S.A.,**
**Département Propriété Industrielle,**
**4-8, Cours Michelet,**
**La Défense 10 - Cedex 42**
**92091 Paris-La-Défense (FR)**

(56) Documents cités:
EP-A- 0 431 927      GB-A- 122 829
US-A- 3 032 398

• PATENT ABSTRACTS OF JAPAN vol. 8, no. 225
(C-247)(1662) 16 Octobre 1984
• SPRECHSAAL. vol. 117, no. 7, Juillet 1984,
COBURG DE pages 627 - 629; F.K. VAN DIJEN ET
AL.: 'LARGE SCALE PRODUCTION OF FINE
NON-OXIDE CERAMIC POWDERS'

## Description

L'invention a pour objet un procédé continu de préparation de nitrure d'aluminium par carbonitruration d'alumine.

La préparation de nitrure d'aluminium a donné lieu à une abondante littérature, qu'il s'agisse des conditions de la réaction permettant d'aboutir à ce nitrure ou de l'appareillage mis en oeuvre pour cette réaction.

Ainsi on a déjà proposé d'effectuer cette préparation dans un réacteur à lit fluidisé (voir par exemple la demande de brevet européen 0 266 927, la demande japonaise 63.297205, la demande de brevet anglais 87.00208).

On a également proposé d'effectuer la réaction dans un four tournant (voir par exemple les demandes de brevet japonais 62.278109, 62.237937, 63.20030, 61.74635).

On a encore proposé de préparer le nitrure d'aluminium dans un four vertical à empilement de godets circulants (voir par exemple la demande de brevet européen 0 272 377) ou fixes (brevet japonais 1 290 562).

Ces différentes technologies présentent un certain nombre d'inconvénients : d'une part, elles ont en commun d'assurer une productivité limitée car le volume utile des réacteurs est toujours faible. Ainsi à titre d'information, le taux de remplissage habituel d'un four tournant n'excède généralement pas 13 %. Il en résulte évidemment des dépenses d'énergie élevées rapportées à la quantité de nitrure produite.

Le four tournant se caractérise en général par une large distribution de temps de séjour des réactifs dans le four ce qui conduit à une hétérogénéité des produits obtenus.

Le réacteur à lit fluidisé présente le même défaut dans le cas d'une utilisation en continu, ce qui nécessite en général l'emploi d'une cascade de réacteurs disposés en série.

Il va de soi que ces défauts sont redhibitoires et que le besoin est permanent à la fois d'augmenter la productivité des équipements, d'améliorer l'homogénéité du produit et la fiabilité des procédés de fabrication dudit produit.

L'invention propose donc un nouveau procédé continu de préparation de nitrure d'aluminium par carbonitruration d'alumine, dans lequel la réaction est conduite dans un réacteur méthodique.

L'expression "réacteur méthodique" est utilisé ici dans son sens conventionnel, à savoir qu'elle désigne un réacteur dans lequel chaque grain de réactif participe à la réaction et tous les grains de réactifs participent sensiblement de la même manière.

L'invention concerne plus précisément un tel procédé, caractérisé en ce que la réaction entre l'alumine, le carbone et l'azote est effectuée dans un réacteur continu à lit circulant, fonctionnant à taux de remplissage constant, à temps de séjour des réactifs homogène et constant et à percolation de la charge dans des conditions assurant une composition homogène de la phase gazeuse autour de chaque particule à un niveau donné et des échanges thermiques et des transferts de masse intenses.

Dans ce procédé, le taux de remplissage constant peut être obtenu grâce à l'emploi d'une sonde de niveau agissant sur le dispositif d'alimentation du réacteur.

Le temps de séjour homogène et constant peut être obtenu grâce à une extraction continue, par exemple par doseur pondéral ou volumétrique, situé à la base du lit coulant et à un écoulement type piston de la charge dans une virole à section constante.

Le percolation de la charge s'effectue avantageusement par de l'azote circulant à contre-courant des solides et à vitesse élevée entre les grains.

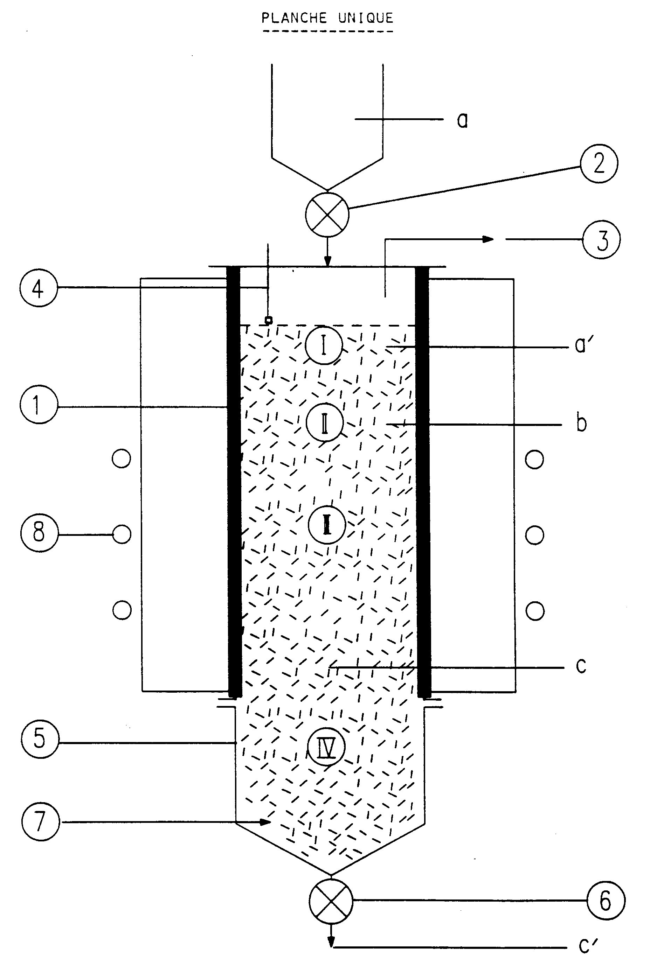

A titre purement illustratif, le procédé et le réacteur permettant sa mise en oeuvre sont représentés sur la figure annexée.

Cette figure comporte trois séries de symboles :

- des symboles numérotés 1 à 8, qui concernent le réacteur lui-même et ses principaux accessoires ;
- des symboles numérotés I à IV qui correspondent aux zones du réacteur et aux étapes de la réaction réalisées dans ces zones ;
- des symboles a, a′, b, c, c′ qui correspondent à la nature physique et/ou chimique des produits présents dans le réacteur.

Les explications qui vont suivre permettront de constater que, dans le procédé conforme à l'invention, le réacteur assure au moins les fonctions :

- de réchauffer des granulés de départ (matières premières mises en forme), par les gaz d'exhaure chauds, c'est-à-dire d'échangeur de chaleur ;
- de réacteur de pyrolyse de la source de carbone (résine en général) contenu dans les granulés ;
- de réacteur de carbonitruration ;
- de réchauffeur de l'azote entrant dans le réacteur, par contact avec les granulés sortant de la zone chaude du four.

Le réacteur schématisé sur la figure et qui est destiné à fonctionner de manière sensiblement verticale comprend essentiellement un tube principal (1) généralement en graphite, dont le rapport longueur/diamètre interne est généralement compris entre 5 et 20 et de préférence entre 8 et 15. La partie centrale du tube est avantageusement chauffée par induction électromagnétique (8). Ce tube est relié à sa partie supérieure à un doseur (2) servant à alimenter le réacteur en granulés frais et à un collecteur des gaz d'exhaure (3), lesdits gaz, constitués essentiellement de CO, $CH_4$ et d'azote en excès étant dirigés à la base d'un four d'incinération (non représenté). Une sonde (4) fixe le niveau de remplissage du réacteur.

A sa partie inférieure, le tube (1) est avantageusement prolongé par une virole (5), par exemple en acier inoxydable comprenant au moins une alimentation en azote (7) et à l'extrémité inférieure de cette virole, de préférence de forme tronconique, un doseur volumétrique étanche (6) permet l'extraction des granulés en vue de leur pesée en continu.

Dans le procédé conforme à l'invention, le réacteur tel que décrit ci-avant est alimenté en continu au moyen de granulés frais (a), lesdits granulés étant eux-mêmes obtenus par extrusion ou tout moyen équivalent et séchage, en général autour de 150°C et granulation ou tronçonnage d'une pâte constituée par un mélange d'alumine de carbone et, notamment pour faciliter la préparation de cette pâte, d'une résine thermodurcissable susceptible de générer du carbone lors de sa pyrolyse.

Les proportions de carbone et de résine sont ajustées afin de conférer simultanément une porosité et une résistance mécanique satisfaisantes aux granulés.

Le noir de carbone apporte le volume poreux favorable à la vitesse de carbonitruration et la résine consolide les granulés.

La résine thermodurcissable peut être avantageusement choisie parmi les résines formophénoliques en solution aqueuse, mais il va de soi que d'autres résines peuvent être utilisées telles que les résines époxy, polyester, polyimides, etc...

Le noir peut être choisi dans une large gamme de noirs de carbone, pour autant que le diamètre moyen des particules de noir se situe dans la zone 0,5 à 10 $\mu$m et de préférence 1 à 5 $\mu$m et que leur volume poreux soit au moins égal à 0,3 $cm^3$/g. A titre purement indicatif, on mentionnera notamment le noir d'acétylène dont le volume poreux peut atteindre 10 $cm^3$/g.

Quant à l'alumine, il convient de choisir une alumine de haute pureté et une dimension de particules du même ordre de grandeur que celles du noir est recommandée. Pour la préparation de la pâte (et des granulés) et pour des raisons d'homogénéisation, il peut être avantageux de faire appel à un dispersant par exemple du type sel d'ammonium d'un acide polyacrylique.

Dans la préparation des granulés (a) on met en oeuvre d'une manière générale une quantité de carbone total, c'est-à-dire carbone tel quel et carbone généré par la résine thermodurcissable égal ou supérieur à la stoéchiométrie de la réaction de carbonitruration (rapport C/$Al_2O_3$ = 3) : cet excès peut atteindre 100 % et est de préférence compris entre 0 et 50 %.

Ces granulés d'alimentation (a) présentent un volume poreux (mesuré au porosimètre à mercure jusqu'à une pression de 200 MPa), supérieur à 0,05 $cm^3$/g et pouvant atteindre jusqu'à 2 $cm^3$/g et une résistance à l'écrasement généralement comprise entre 0,2 et 3,0 MPa (résistance mesurée selon la méthode "Bulk crushing strength" - (Shell method) -).

Les granulés frais (a) -qui sont donc constitués par $Al_2O_3$ + C + résine- sont introduits dans le réacteur et leur niveau est maintenu constant grâce à la sonde 4.

La zone I est une zone d'échange de chaleur entre les gaz d'exhaure (3) et les granulés (a) : de ce fait ces granulés sont progressivement réchauffés (a′) dans cette zone I. La grande surface d'échange offerte par les granulés et la vitesse élevée de l'azote permettent un transfert thermique efficace.

Le déplacement des granulés les conduit dans la zone II où se produit essentiellement la pyrolyse de la résine (granulés pyrolysés b).

Les granulés (b) sont progressivement réchauffés jusqu'à arriver à une température correspondant à la température de carbonitruration de l'alumine par réaction des granulés $Al_2O_3$ + C avec $N_2$ alimenté à la base du réacteur. Cette température de la zone III se situe en général aux alentours de 1450-1500°C. Il va de soi que cette indication correspond à la valeur habituelle de la température de carbonitruration mais la température peut varier suivant les niveaux où la mesure est réalisée et, d'une manière plus générale, elle peut s'écarter de $\pm$ 10 % de la valeur indiquée.

Les granulés pyrolysés b sont donc transformés, au sortir de la zone III en granulés carbonitrurés chauds (c) (AlN + C).

Ces granulés chauds (c) poursuivent leur déplacement vers le bas du réacteur et le dispositif d'extraction et traversent la zone IV dans laquelle ils sont balayés par l'azote alimentant le réacteur (7), permettant ainsi un réchauffage de l'azote destiné à la réaction de carbonitruration.

On extrait ainsi, grâce au doseur (6), des granulés froids (c′) pouvant contenir un excès de carbone (AlN + C), lesdits granulés présentant une teneur en $\alpha Al_2O_3$ résiduaire inférieure à 0,5 % par rapport à AlN (mesure effectuée par diffraction des rayons X).

Le carbone excédentaire peut être éliminé par combustion dans un gaz contenant de l'oxygène, de préférence à une température n'excédant pas 700°C.

Le nitrure d'aluminium pur est finalement désaggloméré, par exemple dans un broyeur à jet d'air, avantageusement équipé d'une chambre de broyage revêtue d'élastomère, afin de prévenir toute contamination.

Il est avantageux d'associer au broyeur un sélecteur à vitesse variable destiné à extraire du circuit de broyage les particules fines et recycler les plus grossières.

La poudre de nitrure d'aluminium telle qu'obtenue grâce à la mise en oeuvre du procédé décrit ci-avant est caractérisée en ce qu'elle se présente sous forme de particules de taille moyenne comprise entre 0,5 et 5 $\mu$m, constituées d'AlN avec une teneur résiduaire en $\alpha Al_2O_3$ n'excédant pas 0,5 % (en poids par rapport à AlN) et une surface spécifique BET au moins égale à 2 $m^2$/g et pouvant atteindre 5 $m^2$/g. Une telle poudre constitue également un objet de l'invention. Il convient de noter l'excellence et l'intérêt du taux très faible d'alumine $\alpha$ résiduaire. On sait en effet que la poudre d'AlN peut contenir plusieurs types d'oxygène, à savoir oxygène faiblement lié, oxygène sous forme d'oxydes libres ou oxygène dissous dans le réseau d'AlN (voir A. Thomas et G. Müller cfi/Ber. DKG 67 (1990) n° 4 pp. 146-9). L'oxygène qui reste dans le réseau à l'issue du frittage conditionne la conductibilité thermique des pièces en AIN (voir Jal. of the American Ceramic Society, Vol. 72, n° 11 pp. 2031-42). Or, afin de faciliter le frittage, des oxydes tels que $Y_2O_3$ sont ajoutés à la poudre d'AIN. Ces oxydes se combinent à l'oxyde d'aluminium qui entoure chaque grain d'AIN pour former des aluminates fusibles au contact d'AIN. L'oxygène dissous diffuse alors de l'intérieur des grains d'AIN vers cette phase fondue. L'oxygène de surface présente un contact optimal avec les additifs oxydes car il est réparti en couche de faible épaisseur sur toute la surface de la poudre. Il peut donc facilement se combiner avec les additifs et, à partir de là, ne peut plus diffuser dans le réseau.

Tel n'est pas le cas de l'alumine a résiduaire présente sous forme de petits agrégats dispersés dans la poudre d'AIN. La probabilité pour qu'elle rencontre les additifs est très faible et aux températures de frittage, vers 1850°C, il y a beaucoup plus de chance pour que cette alumine se dissolve dans AIN, ce qui contribuera à augmenter la teneur en oxygène dissous et donc à limiter la conductivité thermique de la pièce frittée. Il est donc essentiel de réduire autant que faire se peut la teneur en $Al_2O_3$ résiduaire, c'est-à-dire pousser aussi loin que possible la réaction

$$Al_2O_3 + 3C + N_2 \rightarrow 2AIN + CO.$$

Certes l'augmentation de la température et de la durée peuvent aller au bout de cette transformation mais au détriment de la finesse des grains d'AIN et de leur surface spécifique, la diminution de cette surface ayant un effet défavorable sur la réactivité au frittage.

C'est donc le grand intérêt des poudres et du procédé conformes à l'invention de pouvoir associer finesse et surface spécifique à une teneur très faible en alumine α résiduaire.

L'invention sera illustrée par l'exemple suivant.

## EXEMPLE

1.- On mélange 504 parties en poids d'alumine de haute pureté, finement broyée en grains dont le diamètre moyen est de 1 μm (norme ASTM C 678) avec 151 parties de noir d'acétylène (diamètre moyen 2 à 3 μm), 335 parties de résine formophénolique en solution aqueuse (concentration 60 % environ) et 10 parties d'un dispersant polyacrylate d'ammonium.

Le mélange est traité dans un malaxeur revêtu d'alumine jusqu'à disparition des particules blanches d'alumine.

La pâte résultante sert à alimenter une extrudeuse équipée d'inserts en alumine dans les orifices d'extrusion. Le diamètre des orifices est de 3 mm.

Après mise en forme, les joncs sont séchés à 150°C dans une étuve ventilée (perte de poids de 13,8 %) puis sont tronçonnés.

Les granulés (a) ont la composition pondérale suivante :

| | |
|---|---|
| - alumine | 58,5 % |
| - carbone | 17,5 % |
| - résine | 23,5 % |
| - dispersant | 0,5 % |

Le volume poreux des granulés (porosimètre à mercure) est de 0,09 $cm^3/g$ et la résistance à écrasement est de 2,8 MPa.

2.- Les granulés (a) servent à alimenter un réacteur en marche continue constitué dans sa partie supérieure par un tube en graphite (1) de rapport longueur/diamètre de 10.

Le débit d'alimentation des granulés (a) est de 4,4 Kg/h (ce qui correspond à 2,7 Kg/h d'AIN à 100 %).

Le réacteur est alimenté à sa partie inférieure (7) par de l'azote au débit de 12 Kg/h.

Dans le réacteur, la température de la zone chaude (zone de carbonitruration III) est de 1450-1500°C, la température dans la zone II (où se produit la pyrolyse de la résine) allant de 600 à 1000°C, les gaz d'exhaure sortant (en 3) à environ 450°C. La pyrolyse s'accompagne d'une perte de poids d'environ 12,8 %.

Le temps de séjour dans la zone de carbonitruration (granulés c) est d'environ 12 heures.

Les granulés complètement transformés et refroidis (c') sont soutirés à la vitesse de 2,42 Kg/h.

L'analyse par diffraction des rayons X ne permet pas d'y déceler d'alumine α résiduaire (limite de détection : 0,2 % d'$Al_2O_3$).

3.- Les granulés (c') sont repris et étalés sur des plateaux en inconel en couche d'environ 1 cm d'épaisseur puis chargés dans un four discontinu chauffé électriquement, la température étant maintenue homogène à 650°C $\pm$ 5° par circulation d'air.

On maintient à cette température pendant 8 heures. La perte de masse est d'environ 15 %.

Après ce traitement, le taux de carbone libre résiduaire est inférieur à 700 ppm, la teneur en oxygène ne dépassant pas 1,1 %.

Le nitrure d'aluminium ainsi obtenu est finalement désaggloméré dans un broyeur à jet d'air, aux parois revêtues d'élastomère.

La taille moyenne des particules de l'AIN final est de 1,4 μm et la surface spécifique BET de cet AIN est de 3,5 $m^2/g$.

## Revendications

1. Procédé de préparation du nitrure d'aluminium par réaction de carbonitruration à partir d'alumine, de carbone, d'une résine susceptible de générer du carbone lors de sa pyrolyse et d'azote dans un réacteur continu à lit circulant, fonctionnant à taux de remplissage constant, à temps de séjour des réactifs homogène et constant et à percolation de la charge dans des conditions assurant une composition homogène de la phase gazeuse autour de chaque particule à un niveau donné et des échanges thermiques et des transferts de masse intenses, caractérisé en ce que la réaction est effectuée dans un réacteur fonctionnant de manière sensiblement verticale et assurant au moins les fonctions :

- de réchauffer des granulés de départ (matières premières mises en forme), par les gaz d'exhaure chauds, c'est-à-dire d'échangeurs de chaleur (zone I) ;
- de réacteur de pyrolyse de la résine contenue dans les granulés (zone II);
- de réacteur de carbonitruration (zone III) ;
- de réchauffeur de l'azote entrant dans le réacteur, par contact avec les granulés sortant de la zone chaude du four (zone IV).

2. Procédé selon la revendication 1, caractérisé en ce que la réaction est effectuée dans un réacteur fonctionnant de manière sensiblement verticale et comprenant :

- un tube principal (1), généralement en graphite, dont la partie centrale est chauffée notamment par induction électromagnétique (8) ;
- à la partie supérieure du tube (1), un doseur (2) servant à alimenter le réacteur en granulés comprenant l'alumine, le carbone et une résine générant du carbone par pyrolyse ;
- également à la partie supérieure du tube (1), une sonde (4) fixant le niveau de remplissage du tube (1) ;
- à la partie inférieure du tube (1), une virole (5) notamment en acier inoxydable, comportant au moins une arrivée d'azote (7) et, dans sa partie inférieure, un doseur volumétrique étanche (6) permettant l'extraction des granulés ;
- un dispositif d'extraction des gaz d'exhaure (3) également à la partie supérieure du tube (1).

3. Procédé selon l'une quelconque des revendications 1 ou 2, caractérisé en ce que les granulés d'alimentation (a) comprennent de l'alumine et du carbone, et une résine générant du carbone par pyrolyse, dans un rapport molaire carbone total/alumine supérieur ou égal à 3.

4. Procédé selon la revendication 3, caractérisé en ce que les granulés (a) présentent un volume poreux supérieur à 0,05 cm$^3$/g et une résistance à l'écrasement comprise entre 0,2 et 3,0 MPa.

5. Procédé selon l'une quelconque des revendications 1 à 4, caractérisé en ce que la température des gaz d'exhaure est d'environ 450°C, la température dans la zone de pyrolyse va de 600 à 1000°C et la température dans la zone de carbonitruration est d'environ 1450-1500°C.

6. Nitrure d'aluminium sous forme de particules de taille moyenne comprise entre 0,5 et 5 $\mu$m, constituées d'AIN ayant une teneur en alumine $\alpha$ résiduaire n'excédant pas 0,5 % en poids par rapport à AIN et présentant une surface spécifique BET au moins égale à 2 m$^2$/g.

7. Des particules d'AIN selon la revendication 6, telles qu'obtenues par mise en oeuvre du procédé selon l'une quelconque des revendications 1 à 5.

## Claims

1. Process for the preparation of aluminium nitride by a carbonitriding reaction starting with alumina, carbon, a resin capable of generating carbon when it is pyrolysed, and nitrogen in a continuous circulating-bed reactor, operating at a constant filling ratio, with a homogeneous and constant residence time of the reactants and with percolation of the charge under conditions ensuring a homogeneous composition of the gaseous phase around each particle at a given level and intense heat exchanges and mass transfers, characterized in that the reaction is carried out in a reactor operating in a substantially vertical manner and ensuring at least the functions of:

- heating the starting granules (shaped raw materials), by the hot spent gases, that is to say heat exchanger gases (zone I);
- reactor for the pyrolysis of the resin contained in the granules (zone II);
- carbonitriding reactor (zone III);
- heater for the nitrogen entering the reactor by contact with the granules leaving the hot zone of the furnace (zone IV).

2. Process according to Claim 1, characterized in that the reaction is carried out in a reactor operating in a substantially vertical manner and comprising:

- a main tube (1), generally made of graphite, the central part of which is heated in particular by electromagnetic induction (8);
- at the upper part of the tube (1), a metering device (2) used for feeding the reactor with granules comprising alumina, carbon and a resin which generates carbon by pyrolysis;
- also at the upper part of the tube (1), a probe (4) determining the filling level of the tube (1);
- at the lower part of the tube (1), a shell (5) in particular made of stainless steel, including at least one nitrogen intake (7) and, in its lower part, a leak-tight positive-displacement metering device (6) allowing extraction of the granules;

- a device for extracting the spent gases (3) also at the upper part of the tube (1).

3. Process according to either of Claims 1 and 2, characterized in that the feed granules (a) comprise alumina and carbon, and a resin which generates carbon by pyrolysis, in a total-carbon/alumina molar ratio greater than or equal to 3.

4. Process according to Claim 3, characterized in that the granules (a) have a pore volume greater than 0.05 cm$^3$/g and a crushing strength between 0.2 and 3.0 MPa.

5. Process according to any one of Claims 1 to 4, characterized in that the temperature of the spent gases is approximately 450°C, the temperature in the pyrolysis zone ranges from 600 to 1000°C and the temperature in the carbonitriding zone is approximately 1450-1500°C.

6. Aluminium nitride in the form of particles with a mean size between 0.5 and 5 $\mu$m, made up of AlN having a residual $\alpha$ alumina content not greater than 0.5 % by weight relative to AlN and having a BET specific surface at least equal to 2 m$^2$/g.

7. AlN particles according to Claim 6, as obtained by use of the process according to any one of Claims 1 to 5.

**Patentansprüche**

1. Verfahren zur Herstellung von Aluminiumnitrid durch Carbonitridierungsreaktion ausgehend von Aluminiumoxid, Kohlenstoff, einem Harz, das bei seiner Pyrolyse Kohlenstoff erzeugen kann, und Stickstoff in einem kontinuierlichen Reaktor mit zirkulierendem Bett, der mit konstantem Befüllungsgrad arbeitet, bei homogener und konstanter Verweildauer der Reagenzien und unter Perkolieren der Befüllung unter Bedingungen, die eine homogene Zusammensetzung der Gasphase um jedes Teilchen bei einer gegebenen Höhe und einen thermischen Austausch und eine intensive Massenübertragung gewährleisten, dadurch gekennzeichnet, daß die Reaktion in einem Reaktor durchgeführt wird, der nahezu vertikal betrieben wird und mindestens die folgenden Funktionen gewährleistet:

- Wiederaufheizen des Ausgangsgranulats (in Form gebrachte Ausgangsstoffe) durch heiße Austrittsgase, d.h. Gas aus den Wärmeaustauschern (Zone I);

- Reaktor zur Pyrolyse des in dem Granulat enthaltenen Harzes (Zone II);

- Reaktor zur Carbonitridierung (Zone III);

- Wiederaufheizen des in den Reaktor eintretenden Stickstoffs durch Kontakt mit dem Granulat, das aus der heißen Zone des Ofens austritt (Zone IV).

2. Verfahren nach Anspruch 1, dadurch gekennzeichnet, daß die Reaktion in einem Reaktor durchgeführt wird, der nahezu vertikal betrieben wird und enthält:

- ein Hauptrohr (1), im allgemeinen aus Graphit, dessen zentraler Teil insbesondere durch elektromagnetische Induktion (8) geheizt wird;

- am oberen Teil des Rohres (1) eine Dosiervorrichtung (2), die zur Zufuhr des Granulats in den Reaktor dient, das Aluminiumoxid, Kohlenstoff und ein mittels Pyrolyse Kohlenstoff erzeugendes Harz enthält;

- ebenfalls am oberen Teil des Rohres (1) eine Sonde (4), die die Befüllungshöhe des Rohres (1) fixiert;

- am unteren Teil des Rohres (1) ein Band (5), insbesondere aus Edelstahl, das mindestens eine Stickstoffzufuhr (7) und an seinem unteren Teil eine dichte Volumendosiervorrichtung (6) enthält, die die Entnahme des Granulats ermöglicht;

- eine Abführvorrichtung für die Austrittsgase (3), ebenfalls am oberen Teil des Rohres (1).

3. Verfahren nach Anspruch 1 oder 2, dadurch gekennzeichnet, daß das zugeführte Granulat (a) Aluminiumoxid, Kohlenstoff und ein durch Pyrolyse Kohlenstoff erzeugendes Harz in einem Molverhältnis von Gesamtkohlenstoff/Aluminiumoxid von größer oder gleich 3 enthält.

4. Verfahren nach Anspruch 3, dadurch gekennzeichnet, daß das Granulat (a) ein Porenvolumen oberhalb von 0,05 cm$^3$/g und eine Abriebfestigkeit zwischen 0,2 und 3,0 MPa aufweist.

5. Verfahren nach einem der Ansprüche 1 bis 4, dadurch gekennzeichnet, daß die Temperatur der Austrittsgase etwa 450 °C beträgt, die Temperatur in der Pyrolysezone von 600 bis 1000 °C reicht und die Temperatur in der Carbonitridierungszone etwa 1450 bis 1500 °C beträgt.

6. Aluminiumnitrid in Form von Teilchen mit einer mittleren Größe zwischen 0,5 und 5 $\mu$m, bestehend aus AlN mit einem Restgehalt an $\alpha$-Aluminiumoxid, der 0,5 Gew.-%, bezogen auf AlN, nicht überschreitet, und mit einer spezifischen BET-Oberfläche von mindestens 2 m$^2$/g.

7. AlN-Teilchen nach Anspruch 6, erhalten durch das Verfahren nach einem der Ansprüche 1 bis 5.

PLANCHE UNIQUE